# EUROPEAN PATENT APPLICATION

(11) **EP 4 726 668 A1**
(43) Date of publication of application: **15.04.2026**
(21) Application number: 24206044.0
(22) Date of filing: 11.10.2024
(51) Int. Cl.: G06V 10/56, G06V 10/764, G06V 10/82, G06V 20/58

(54) **A METHOD FOR IDENTIFYING TRAFFIC CONTROL SIGNALS**

(71) Applicant: Zenseact AB, 417 56 Gothenburg (SE)
(72) Inventor: VERBEKE, Willem, 412 60 Göteborg (SE); MÅNSSON, Olle, 417 39 Göteborg (SE); MAJD, Mahshid, 417 62 Göteborg (SE)
(74) Representative: Zacco Sweden AB

(57) **Abstract**

A method (1000) for identifying traffic control signals in image data (500) depicting a plurality of traffic lights (100) is provided. The method comprises obtaining (1002) the image data (500) from a camera (402) arranged in a vehicle (1), identifying (1004) traffic light objects (502a,b) in the image data (500), wherein the traffic light objects (502a,b) of the image data (500) depict the traffic lights (100), determining (1006) spatial data (716) for each of the traffic light objects (502a,b) identified in the image data (500), transferring (1008) the image data (500) as well as the spatial data (716) for the traffic light objects as inputs to a detection model (700) configured to detect light objects (800, 503a-f) linked to the traffic light objects (102a-c) in the image data (500), and determine a colour attribute (802) and a symbol attribute (804) for each of the light objects, obtaining (1010) output data (702) from the detection model (700), wherein the output data (702) reflects the traffic control signals based on the colour attribute (802) and the symbol attribute (804) of each of the light objects, and determining (1012) control data (706) based on the output data (702), wherein the control data comprises at least one of a stop signal and/or a proceed signal.

## Description

### TECHNICAL FIELD

The disclosed technology relates to methods and systems for identifying traffic control signals in image data. In particular, but not exclusively, the disclosed technology relates to identifying such traffic control signals in a reliable but yet cost-efficient manner.

### BACKGROUND

Automated Driving Systems (ADS) are rapidly improving in passenger vehicles. These systems increase safety and comfort by supporting the driver in dynamic driving tasks. These systems can be divided in two sub-categories; Autonomous Driving (AD) systems, configured to control the vehicle without human supervision, and Advanced Driver Assistance Systems (ADAS), arranged to assist a driver but not necessarily offer full autonomy. A variety of ADAS/AD systems are today available.

In these systems, one or more sensors, such as cameras, and computing devices can be provided for determining traffic control signals provided by traffic lights. By being able to identify these signals, control data may in turn be provided to the ADAS or AD systems. By way of example, in case the control data is provided to the ADAS, the control data may be used for triggering a warning signal or an emergency function in case a driver starts to drive despite that the traffic light displays a red signal. In case the control data is provided to the AD, the traffic signal information can be used as control data to determine which subsystems that need to be activated in order to make an accurate assessment of the traffic situation, and subsequently decide how the vehicle should be controlled.

The systems used today are most often using a combination of presence sensors, such as LiDARs, and cameras. A common approach used is to have the presence sensors for detecting the traffic lights, the cameras for recognizing and classifying the traffic light's colour, e.g. red, yellow or green, and a decision engine for making a decision on how to proceed further based on the traffic light's colour. It is known to use Al systems for identifying the traffic light depicted in image data generated by the camera, and also to recognize and classify the colour of the traffic light.

An alternative approach is to use so-called vehicle-to-infrastructure (V2I) communication for providing traffic light information from the traffic light to the vehicle. Using this approach, instead of having the cameras and data processing equipment for analysing the image data, the control data can be transmitted directly from the traffic lights to the vehicle by using wireless data communication standards, such as Dedicated Short-Range Communications (DSRC) or Cellular Vehicle-to-Everything (C-V2X). This approach however requires that the traffic lights are equipped with transmitters such that the control data can be made available, and also that the vehicles are equipped with receivers for receiving the control data.

If using the camera-based approach described above and having AI systems for identifying the traffic control signals provided by the traffic lights, there are challenges. One challenge is that the traffic lights may be placed in various ways. Even though many countries strive to place the traffic lights in a consistent manner, there is most often no standardized manner for mounting the traffic lights. For instance, the traffic lights may be mounted on a pole, the traffic lights can be suspended using wires, sometimes referred to as span wire, the traffic lights may be mounted on overhead gantries, and so on. In addition to that the traffic lights may be mounted in different ways, a large variety of symbols may also be used. For instance, the traffic lights may, in addition to providing a colour, provide a directional symbol, such as an arrow. In this way, by way of example, it is made possible to indicate that it is permitted to turn in a certain direction, but not proceed forward or any other direction. The symbols may also be directed to different road users. For instance, to signal that it is allowed for pedestrians to walk, a symbol of a walking man may be provided as part of the traffic control signal. Thus, what may at first hand seem to be a straight forward problem to solve by using an Al-based approach will most often require substantial amounts of training data and also significant efforts for annotating such training data.

Thus, even though there are systems available today for recognizing and classifying the traffic control signals provided by the traffic lights, there is room for improvement. More particularly, since the traffic lights can placed in various ways and also comprise a large variety of symbols, there is a need for a system and method that can handle this complexity in a reliable but yet cost-efficient manner. Even though this problem may be solved with vast amount of training data, this comes with a cost, namely that substantial efforts have to be spent to generate this data.

### SUMMARY

The herein disclosed technology seeks to mitigate, alleviate or eliminate one or more of the above-identified deficiencies and disadvantages in the prior art to address various problems relating to identifying traffic control signals provided by traffic lights by a camera-equipped vehicle.

Various aspects and embodiments of the disclosed technology are defined below and in the accompanying independent and dependent claims.

A first aspect of the disclosed technology comprises a method for identifying traffic control signals in image data depicting a plurality of traffic lights. The method may comprise obtaining the image data from a camera arranged in a vehicle, identifying traffic light objects in the image data, wherein the traffic light objects of the image data depict the traffic lights, determining spatial data for each of the traffic light objects identified in the image data, transferring the image data as well as the spatial data for the traffic light objects as inputs to a detection model configured to detect light objects linked to the traffic light objects in the image data, and determine a colour attribute and a symbol attribute for each of the light objects, obtaining output data from the detection model, wherein the output data reflects the traffic control signals based on the colour attribute and the symbol attribute of each of the light objects, and determining control data based on the output data, wherein the control data comprises at least one of a stop signal and/or a proceed signal.

A second aspect of the disclosed technology comprises a method for generating annotation data for a detection model, wherein the detection model is a machine learning model, configured for outputting a prediction of traffic control signals as a function of image data depicting a plurality of traffic lights. The method may comprise obtaining reference image data depicting reference traffic lights, identifying reference traffic light objects in the reference image data, wherein one or more reference light objects are spatially comprised within the reference traffic light objects, assigning, for the one or more of the reference light objects, the colour attribute and the symbol attribute, and generating the annotation data comprising spatial information related to the reference traffic light objects and, for each of the one or more reference traffic light objects, assigned colour and symbol attribute linked to the reference light objects of the reference traffic light object.

With this aspect of the disclosed technology, similar advantages and preferred features are present as in the other aspects.

Distinctions are made between the traffic lights and the lights comprised in the traffic lights, and also the traffic lights forming part of a real-world environment and the traffic light objects depicting the traffic lights in the image data. Even though the terms used herein have been given their ordinary meaning, to avoid any doubt on how these terms are to be understood, the following defintions are provided:

### Traffic light

A traffic light is a signaling device positioned at road intersections, pedestrian crossings, and other locations to manage the flow of traffic. It typically has three distinct colored lights:
Red - Signals vehicles to stop.
Yellow (Amber) - Warns that the signal is about to change, urging drivers to slow down and prepare to stop.
Green - Signals vehicles to proceed or continue driving.

These lights are usually arranged vertically or horizontally, with red at the top (or left) and green at the bottom (or right). Traffic lights ensure safe and orderly traffic movement by regulating the timing of vehicles and pedestrians across intersections.

The traffic light is a physical device or structure typically mounted on poles or overhead frameworks at intersections or crossings. The traffic light includes the housing for the lights (red, yellow, and green), each of which is embedded within distinct lenses that emit colored lights to regulate traffic. These lights may also feature additional elements, such as pedestrian signals, timers, or directional arrows, which enhance its function in controlling the movement of vehicles and pedestrians.

### Light (of the traffic light)

In line with the above, the light of the traffic light refers to the device arranged to illuminate signals that conveys specific instructions to drivers and pedestrians at intersections or crossings. Most often, several lights are comprised in the traffic lights. The lights use distinct colors to provide clear and universally understood instructions for managing traffic flow safely.

### Traffic light object

The term "traffic light object" refers to an object in the image data that depicts the traffic light in the real world environment represented by the image data.

### Light object

In line with the above, the term "light object" refers to an object in the image data depicting the light of the traffic light of the real world environment.

### Bounding box

A "bounding box" is a frame, e.g. a rectangular frame, used in image processing and computer vision to define the spatial positioning and size of an object within an image. It encloses the object of interest by specifying its top-left and bottom-right coordinates (or sometimes the center, width, and height), creating a boundary around the object. The bounding box simplifies tasks such as object detection, localization, and classification by providing a clear, defined area for analysis. The "bounding box" does not necessarily conform to the shape of the object but may represent the smallest rectangle that can fully contain it.

### Image data

Image data refers to a digital representation of an image depicting a real-world scene. The image data typically consists of a matrix or grid of pixel values. Each pixel may hold information about colour and intensity, often described using numerical values that represent different colour channels (such as Red, Green, and Blue, or RGB, in many color models). The image data is generated by a camera configured to record light or other electromagnetic radiation. The image data may be generated by the camera in isolation, or by the camera in combination with another sensor, such as LiDAR, thereby providing for that 3D data is obtained. The 3D data, which in this context is to be considered to fall within the scope of image data, may also be generated by using two or more cameras.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage is that by leaving out spatial information related to the light objects in the image data, a more time-efficient annotation process may be achieved. Put differently, the approach described herein suggests that the spatial information related to the traffic light objects, i.e. the objects in the image data depicting the traffic lights, is determined during the generation of training data, but that spatial information related to individual light objects of the traffic light is left for the detection model to handle. Thus, instead of having spatial data of the individual light objects of the traffic light manually determined during the annotation process, which is time-consuming, only the spatial data related to the traffic light object is determined as well as the colour attributes and the symbol attributes linked to the light objects comprised in the traffic light object. A benefit of reducing a number of activities involved in the generation of the training data, more particularly reducing a number of activities related to the annotation of this process, is that less time needs to be invested in generating a certain amount of training data.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 generally illustrates examples of traffic lights.
Fig. 2 generally illustrates examples of different symbols that may be used in the traffic lights.
Fig. 3 generally illustrates additional examples of symbols that may be used in the traffic lights.
Fig. 4 generally illustrates a vehicle provided with a LiDAR and a camera for detecting the traffic light and identifying a traffic control signal provided by the traffic light.
Fig. 5 is an example of image data, captured by the camera, depicting the traffic lights.
Fig. 6 generally illustrates the vehicle and different components and modules thereof in further detail.
Fig. 7 generally illustrates by way of example how the image data captured by the camera can be processed into control data provided to an Automated Driving System (ADS).
Fig. 8 illustrates a traffic light object in further detail.
Fig. 9 illustrates a reference traffic light object in further detail.
Fig. 10 is a flowchart illustrating a method for identifying traffic control signals in the image data depicting the traffic lights.
Fig. 11 is a flowchart illustrating a step of determining a current lane of the vehicle in further detail.
Fig. 12 is a flowchart illustrating a step of determining traffic lights linked to the current lane in further detail.
Fig. 13 is a flowchart illustrating a method for generating annotation data for the detection model.
Fig. 14 generally illustrates the vehicle provided with a predictor device, the detection model and the ADS.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

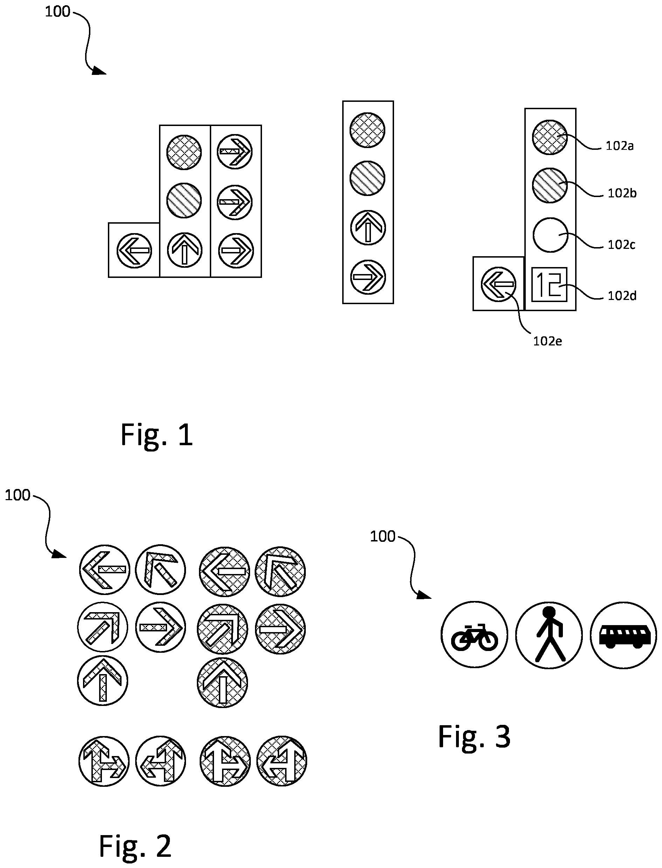

Today, in intersections or other road sections, the flow of traffic, i.e. vehicles and other road users coming from different directions, needs to be controlled to ensure safety and efficiency. A common and reliable way to do so is by using traffic lights 100. As illustrated in fig. 1, the traffic lights 100 may come in different forms and set-ups. In most cases, the traffic lights 100 provides traffic control signals by using different colours for different situations. For instance, green light is generally understood as "go" or "proceed", red light is generally understood as "stop", and yellow light is generally understood as "wait". Further, in some intersections, symbols, herein exemplified as arrows, can be used for providing more detailed traffic control signals. For instance, by using both colours and symbols, a green arrow pointing to the right will provide the traffic control signal that only turning right is allowed. As illustrated, the traffic lights 100 comprise one or more lights 102a-e. These lights may have different colours, different states (e.g. ON, OFF, flashing, etc) and different symbols.

As illustrated in fig. 2, a large variety of symbols may be used. For instance, complex intersections may require a number of different arrows for making sure that the information needed for a driver of a vehicle to understand whether or not he or she is allowed to drive or not. In addition to arrows, as illustrated in fig. 3, different road users may be addressed specifically and for that reason symbols depicting different road users, such as trams, buses, bikes, pedestrians, and horse riders, may be used.

Due to the large number of options available in terms of colours and symbols, it is challenging to automatically recognize and classify the traffic control signals provided by the traffic signals automatically, e.g. using a camera for generating image data and having an algorithm for recognizing and classifying the information provided via the traffic lights.

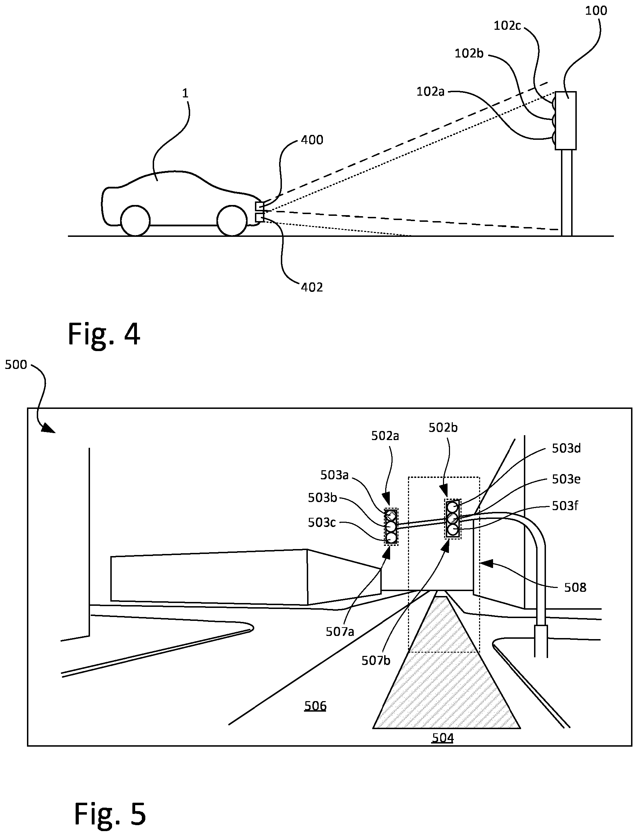

As illustrated in fig. 4, in an ADS-equipped vehicle 1, the traffic control signals provided via the traffic lights 100 can be obtained by using a LiDAR 400 or other type of sensor suitable for the purpose to detect the traffic light 100 and a camera 402 for capturing image data depicting the traffic light 100. Once having the image data, this data may be processed such that the information provided in terms of colour and symbols can be transformed into control data for the ADS. Even though illustrated with two types of sensors, the LiDAR 400 and the camera 402, it is also possible to use only the camera 402, that is, using the camera 402 for detecting the traffic light 100 as well as capturing the image data.

Fig. 5 illustrates an example of the image data 500 depicting the traffic lights 100, by way of example illustrated in fig. 1. In the image data 500, the segments depicting the traffic lights 100 are herein referred to as traffic light objects 502a, 502b. In this particular example, there are two traffic light objects 502a, 502b related to different lanes of the road. By using a sensor system of the vehicle, a current position of the vehicle 1 can be obtained. Once having this position, this can be mapped with map data, e.g. HD map data, such that a current lane 504 can be determined, that is, the lane of the road in which the vehicle is placed. To determine the traffic light object 502b linked to the current lane 504, a space 508 linked to the current lane 504 may be determined, and once this is determined, the traffic light object 502b in this space can be assigned as the traffic light object 502b linked to the current lane 504.

As illustrated, the traffic light objects 502a,b can comprise light objects 503a-f. In the example illustrated, the traffic light objects 502a,b comprise three light objects each. Bounding boxes 507a,b may be provided for the traffic light objects 502a,b. By having the bounding boxes 507a,b, spatial data for the traffic light objects may be provided. As illustrated and as will be further described below, by having the bounding boxes 507a,b for the traffic light objects, but not for the light objects 503a-f individually, annotation of the training data may be made more efficiently.

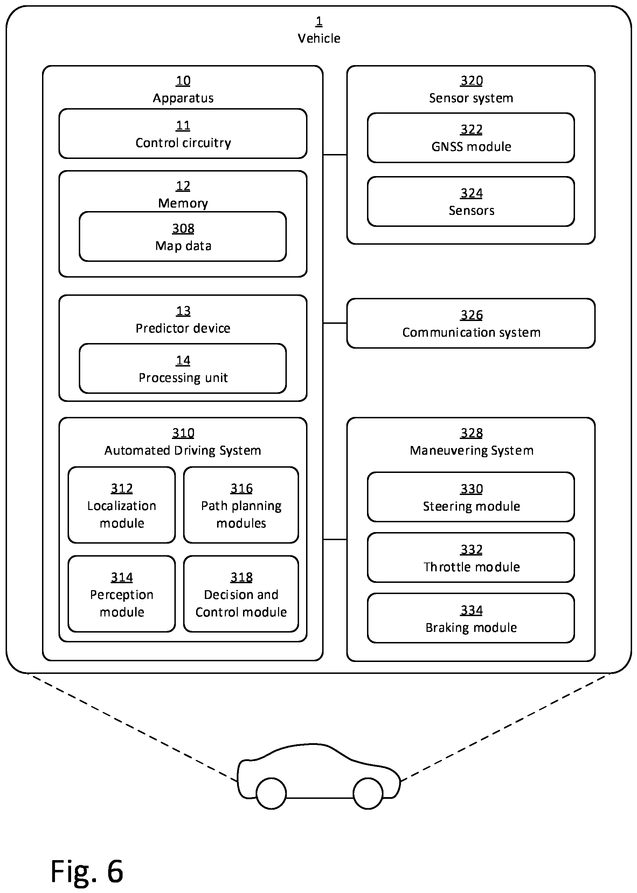

Fig. 6 is a schematic illustration of the ADS-equipped vehicle 1 comprising an apparatus 10 in turn comprising a predictor device 13, wherein the predictor device 13 is configured to implement the approach for identifying the traffic control signals described herein. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 6. Moreover, the vehicle 1 may comprise further elements than those shown in Fig. 6. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 6 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises the communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The ADS 310 may further comprise path planning modules 316 for planning a route ahead based on e.g. information provided from the perception module 314. Further, a decision and control module 318 may be provided for e.g. making decisions based on input from the other modules and provide control instructions, also referred to as control data, to the maneuvering system 328.

Further, a predictor device 13 configured to detect the traffic control signals according to the approach described herein may also be provided. As an alternative to being provided as a separate device, which may in this context be a hardware-based device or a software-based device, sometimes also referred to as a software module, the predictor device 13 may be a module of the ADS.

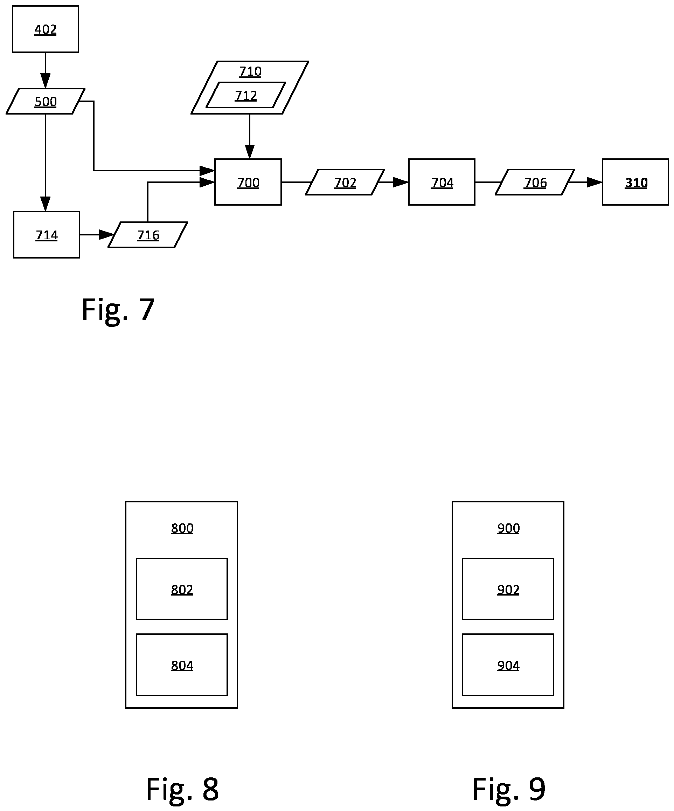

Fig. 7 generally illustrates how the image data 500 captured by the camera 402 can be used for generating the control data 706. As illustrated, the image data 500 can be fed into a detection model 700. In addition to the image data 500, spatial data 716 for the traffic light objects 502a,b may be provided as input to the detection model 700. The spatial data 716 may be determined by a traffic light object identifier 714 based on the image data 500. The detection model 700 may be a machine learning model, such as a neural network, trained to detect the light objects 503a-f in the image data 500, and also to determine a colour attribute and a symbol attribute of the detected light objects 503a-f. Contrary to camera-based systems today used for this purpose, the detection model 700 is not provided with spatial data related to the individual lights of the traffic light objects, but only the spatial data 716 related to the traffic light objects 502a,b comprising the light objects 503a-f. By leaving out this information in the input to the detection model 700, how the individual light objects are placed within the traffic light objects is left for the detection model to handle. By providing fewer input elements, less annotation steps are needed during training, in turn making it possible, for a given period of time and a given amount of resources for annotating, to increase a training data amount.

Once having the output data 702 made available, this can be fed to a control data generator 704 in which the control data 706 is generated. The control data 706 may thereafter be provided to the ADS 310 of the vehicle 1.

As illustrated, the detection model 700 may be trained by providing annotation data 710. This data may comprise reference image data 712 in which reference light objects are identified such that the spatial information for these are obtained. In addition to having these identified, the colour attribute and the symbol attribute linked to reference light objects comprised within the reference traffic light objects are assigned such that a reference colour attribute and a reference symbol attribute for the different reference light objects are provided. An advantage with not taking the spatial information of the individual light objects into account is that less efforts are needed for annotating the annotation data 710 used for training the detection model 700. For instance, while some of the approaches used today are applying bounding boxes for marking the position of the individual light objects in the image data available as part of the annotation process, this is not needed when applying the methods suggested herein.

Another advantage with using the approach herein, which is, leaving out the spatial information of the light objects in the image data, is that a complexity of the detection model 700 may be reduced. This may come with the positive effect that a more reliable detection can be achieved.

The detection model 700 may be a machine learning model, such as a neural network. More particularly, the detection model may be a deep learning model using a transformer architecture for detecting the traffic light objects in the image data. According to one example, the detection model may be a so-called detection transformer, which is described in the article "DETR3D: 3D Object Detection from Multi-View Images via 3D-to-2D Queries" by Wang, Yue, Massachusetts Institute of Technology, et al.

Fig. 8 illustrates the light object 800 in further detail. As illustrated, this can comprise the colour attribute 802, which may e.g. be assigned red, yellow or green, and the symbol attribute 804, which may be an arrow pointing in a certain direction or any other of the examples provided in fig. 1, 2 or 3. In addition, even though not illustrated, the light object 800 may comprise a state attribute, which may be ON or OFF, i.e. light is transmitted from the light represented by the light object or light is not transmitted from the light represented by the light object.

The reference light object 900 is illustrated in fig. 9. In line with the light object 800 illustrated in fig. 8, this may comprise the colour attribute 902 and the symbol attribute 904. However, unlike the attributes in the traffic light object 800, the attributes of the reference traffic light object 900 are assigned during the annotation process. Put differently, the colour attribute 902 assigned and the symbol attributes 904 assigned represent a ground truth, while the attributes of the light traffic object 800 represent predictions. In line with the description above referring to fig. 8, the reference light object 900 may also, even though not illustrated, comprise the state attribute assigned.

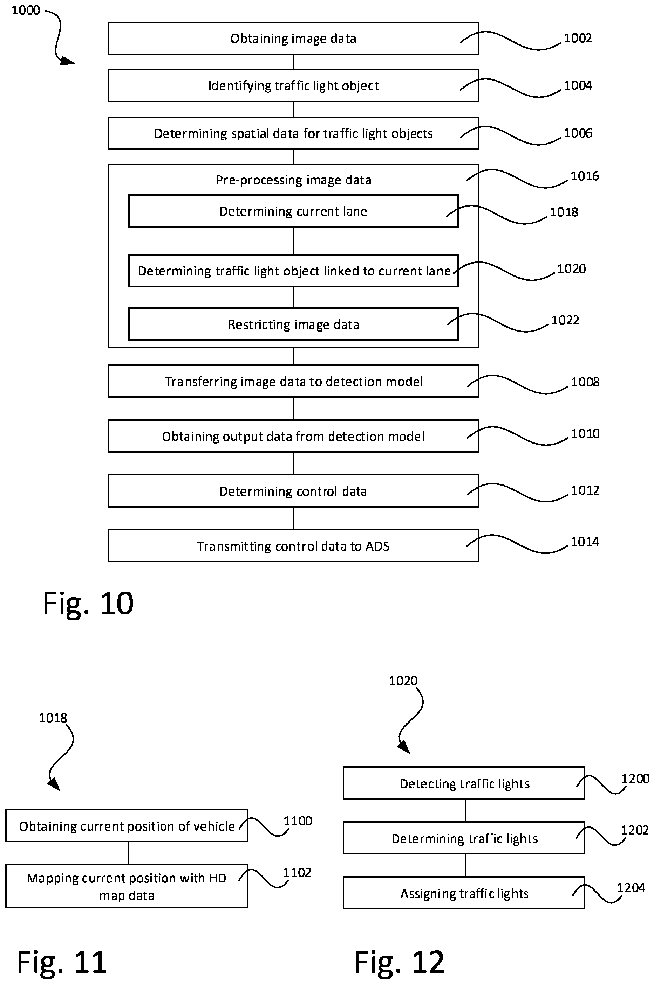

Fig. 10 is a flowchart for illustrating a method 1000 for identifying the traffic control signals in the image data 500 depicting a plurality of traffic lights 100. The method may comprise obtaining 1002 the image data 500 from the camera 402 arranged in the vehicle 1, identifying 1004 the traffic light objects 502a,b in the image data 500, wherein the traffic light objects 502a,b of the image data 500 depict the traffic lights 100, determining 1006 the spatial data 716 for each of the traffic light objects 502a,b identified in the image data 500, transferring 1008 the image data 500 as well as the spatial data 716 for the traffic light objects as inputs to the detection model 700 configured to detect the light objects 800 in the image data 500, and determine the colour attribute 802 and the symbol attribute 804 for each of the light objects. Next, the method may comprise obtaining 1010 the output data 702 from the detection model 700, wherein the output data 702 reflects the traffic control signals based on the colour attribute 802 and the symbol attribute 804 of each of the light objects 800. Thereafter, the method may comprise determining 1012 the control data 706 based on the output data 702, wherein the control data comprises at least one of a stop signal and/or a proceed signal.

The method may further comprise transmitting 1014 the control data 706 to the ADS of the vehicle 1.

In addition, the method may comprise pre-processing 10116 the image data 500 by determining 1018 the current lane 504 of the vehicle 1, determining 1020 the traffic lights 502b linked to the current lane 504, and restricting 1022 the image data 500 to comprise only traffic lights 100 linked to the current lane 504.

As illustrated in fig. 11, the step of determining 1018 the current lane 504 may involve obtaining 1100 a current position of the vehicle 1 using the sensor system 320 arranged in the vehicle 1, and mapping 1102 the current position of the vehicle 1 with map data to determine the current lane 504 of the vehicle 1.

As illustrated in fig. 12, the step of determining traffic light object linked to the current lane 504 may involve detecting 1200 the traffic lights 100 by using a sensor device, such as the LiDAR 400, determining 1202 a sub-set of the image data 500 corresponding to the space 508 pertaining to the current lane 504, and assigning 1204 the traffic light objects 502b placed within the space 508 as the traffic light object 502b linked to the current lane 504.

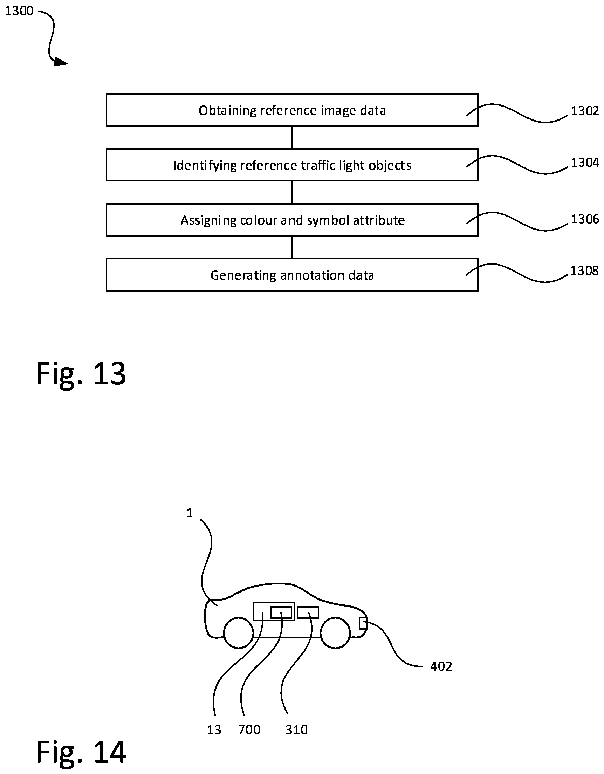

Fig. 13 is a flowchart illustrating a method 1300 for generating the annotation data 710 for the detection model 700, wherein the detection model may be a machine learning model, configured for outputting a prediction of traffic light signals as a function of the image data 500 depicting a plurality of traffic lights 100. The method may comprise obtaining 1302 the reference image data 712 depicting the reference traffic lights, identifying 1304 the reference traffic light objects 900 in the reference image data 712, wherein one or more reference light objects 900 are spatially comprised within the reference traffic light objects, assigning 1306, for the one or more of the reference traffic light objects 900, the colour attribute 902 and the symbol attribute 904, and generating 1308 the annotation data 710 comprising spatial information related to the reference traffic light objects 900 and, for each of the one or more reference traffic light objects, assigned colour and symbol attribute 902, 904 linked to the reference light objects of the reference traffic light object..

During training, matching costs for M colour and symbol predictions and N colour and symbol ground truths may be generated, wherein colour and symbol ground truths are provided by the annotation data.

The method 1300 may further comprise matching each prediction to each ground truth, and using bipartite matching for finding an optimal match among the matching costs.

The method 1000 and/or 1300 are preferably computer-implemented methods, performed by a processing system of the ADS-equipped vehicle. The processing system may for example comprise one or more processors and one or more memories coupled to the one or more processors, wherein the one or more memories store one or more programs that perform the steps, services and functions of the method 1000 and/or 1300 disclosed herein when executed by the one or more processors.

Executable instructions for performing these functions are, optionally, included in a non-transitory computer-readable storage medium or other computer program product configured for execution by one or more processors.

As illustrated in fig. 6, the vehicle 1 may comprise control circuitry (e.g. one or more processors) configured to perform the functions of the method 1000 disclosed herein, where the functions may be included in a non-transitory computer-readable storage medium 12 or other computer program product configured for execution by the control circuitry 11. In other words, the vehicle 1 may comprise one or more memory storage areas 12 comprising program code, the one or more memory storage areas 12 and the program code configured to, with the one or more processors 11, cause the vehicle 1 to perform the method 1000 according to any one of the embodiments disclosed herein. As illustrated in fig. 14, which is a schematic block diagram representation of the vehicle 1 in accordance with some embodiments, the vehicle 1 may comprise the predictor device 13, the detection model 700, which may be comprised in the predictor device 13, the ADS 310 and the camera 402. As mentioned above, the vehicle 1 may also be configured such that the predictor device 13 and the detection model 700 form part of the ADS 310.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

For the sake of completeness and avoid any doubt, a number of terms used herein are explained in further detail:

### ADS definition

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

### Machine-learning algorithm (perception)

In the present context, a "Machine Learning Algorithm" refers to a computational model or set of techniques that are used to enable a computer to solve a task, such as for example, the vehicle's perception system to interpret and understand the surrounding environment. Perception tasks in ADS involve the vehicle's ability to detect and recognize objects, obstacles, road signs, lane markings, pedestrians, other vehicles, and various environmental conditions. The ADS uses machine learning algorithms to process sensor data, such as data from cameras, lidar, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, lidar output processing, etc.), recurrent neural networks (RNNs) (e.g., for sequence data), and various other techniques like support vector machines (SVM) and decision trees.

The machine-learning algorithms (may also be referred to as machine-learning models, neural networks, and so forth) are implemented in some embodiments using publicly available suitable software development machine learning code elements, for example, such as those which are available in Pytorch, Keras and TensorFlow or in any other suitable software development platform, in any manner known to be suitable to someone of ordinary skill in the art.

### Geographical position

Geographical position of the ego-vehicle is in the present context to be construed as a map position (may also be referred to as in-map position) of the ego-vehicle. In other words, a geographical position or map position can be understood as a set (two or more) of coordinates in a global coordinate system.

### Surrounding environment

The surrounding environment of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

### If-terminology

As used herein, the term "if" may be construed to mean "when or "upon" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

### Obtaining

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### 3D Road Model

In the context of the present disclosure, the term "3D road model" may be understood as a virtual 3D representation of a road, which may be obtained from map data, and in particular High Definition map data (HD Map data). 3D road model may accordingly be understood as data describing the spatial geometry of the road (including any lane markers, road boundaries, barriers, sidewalks, etc.) in the surrounding environment of the vehicle. The term "spatial geometry" may be understood as the structure of spatial objects in terms of points, lines, polygons, polylines, and so forth.

### Perception data

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system, whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

### Sensor Device

In the present context, a "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

### Annotation

In the context of the present disclosure, the term "annotation" refers to the process of labelling or marking specific objects, features, or attributes within data, typically images or videos, to create a labelled dataset for training and evaluating machine learning models. Annotations provide the ground truth or reference information that allows algorithms to learn and make predictions about objects, regions of interest, or characteristics within the data.

For example, for object detection tasks, annotation involves drawing bounding boxes around objects of interest in images or videos and/or specifying the class of the object (e.g., car, pedestrian, traffic sign). This labelled data is used to train ML algorithms to identify and locate objects in new data. Further, for semantic segmentation, each pixel in an image is labelled with a class identifier, assigning a category to every part of the image. This fine-grained labelling helps ML algorithms understand the layout and categories of objects within the image. Moreover, instance segmentation combines object detection and semantic segmentation. It not only identifies object categories but also assigns a unique identifier to each instance of the object, enabling models to distinguish between individual objects of the same class. In image classification tasks, each image in the dataset is labelled with a single class or category (e.g., "cat" or "dog"). This allows models to learn to classify new, unlabelled images into predefined categories.

## Claims

1. A method (1000) for identifying traffic control signals in image data (500) depicting a plurality of traffic lights (100), said method comprising
obtaining (1002) the image data (500) from a camera (402) arranged in a vehicle (1),
identifying (1004) traffic light objects (502a,b) in the image data (500), wherein the traffic light objects (502a,b) of the image data (500) depict the traffic lights (100),
determining (1006) spatial data (716) for each of the traffic light objects (502a,b) identified in the image data (500),
transferring (1008) the image data (500) as well as the spatial data (716) for the traffic light objects as inputs to a detection model (700) configured to detect light objects (800, 503a-f) linked to the traffic light objects (102a-c) in the image data (500), and determine a colour attribute (802) and a symbol attribute (804) for each of the light objects,
obtaining (1010) output data (702) from the detection model (700), wherein the output data (702) reflects the traffic control signals based on the colour attribute (802) and the symbol attribute (804) of each of the light objects , and
determining (1012) control data (706) based on the output data (702), wherein the control data comprises at least one of a stop signal and/or a proceed signal.

2. The method according to claim 1, further comprising
transmitting (1014) the control data (706) to an automated driving system (ADS) of the vehicle (1).

3. The method according to claim 1 or 2, wherein the detection model (700) is a machine learning model, wherein the machine learning model has been trained by means of annotation data (710) comprising reference image data (712) comprising reference traffic light objects in turn comprising reference light objects, each reference light object (900) having the colour attribute (902) and the symbol attribute (904) assigned.

4. The method according to any one of the preceding claims, wherein the detection model (700) is a deep learning model using a transformer architecture for detecting the light objects in the image data (500) and determining the colour attribute (802) and the symbol attribute (804).

5. The method according to claim 4, wherein the detection model is a detection transformer (DETR).

6. The method according to any one of the preceding claims, further comprising
pre-processing (1016) the image data (500) by
determining (1018) a current lane (504) of the vehicle (1),
determining (1020) a traffic light object (502b) linked to the current lane (504), and
restricting (1022) the image data (500) to comprise only the traffic light object (502b) linked to the current lane (504).

7. The method according to claim 6, wherein the step of determining (1018) the current lane (504) involves
obtaining (1100) a current position of the vehicle (1) using a sensor system (320) arranged in the vehicle (1), and
mapping (1102) the current position of the vehicle (1) with map data to determine the current lane (504) of the vehicle (1), and
wherein the step of determining (1020) the traffic light objects (502b) linked to the current lane (504) involves
detecting (1200) traffic lights (100) by using a sensor device, such as a LiDAR (400),
determining (1202) a sub-set of the image data (500) corresponding to a space (508) pertaining to the current lane (504), and
assigning (1204) the traffic light object (502b) placed within the space (508) as the traffic light object (502b) linked to the current lane (504).

8. A method (1300) for generating annotation data (710) for a detection model (700), wherein the detection model is a machine learning model, configured for outputting a prediction of traffic control signals as a function of image data (500) depicting a plurality of traffic lights (100), said method comprising
obtaining (1302) reference image data (712) depicting reference traffic lights,
identifying (1304) reference traffic light objects in the reference image data (712), wherein one or more reference light objects (900) are spatially comprised within the reference traffic light objects,
assigning (1306), for the one or more of the reference light objects (900), the colour attribute (902) and the symbol attribute (904), and
generating (1308) the annotation data (710) comprising spatial information related to the reference traffic light objects and, for each of the one or more reference traffic light objects, assigned colour and symbol attribute (902, 904) linked to the reference light objects of the reference traffic light object.

9. The method according to claim 8, wherein, during training, matching costs for M colour and symbol predictions and N colour and symbol ground truths are generated, wherein the colour and symbol ground truths are provided by the annotation data.

10. The method according to claim 9, further comprising matching each prediction to each ground truth, and using bipartite matching for finding an optimal match among the matching costs.

11. A computer program product, loadable in a memory of a processing unit and comprising instructions suitable for performing the steps of the method according to any one of the claims 1 to 7.

12. A predictor device (13) comprising a processing unit (14) configured to carry out the method according to any one of the claims 1 to 7.

13. A vehicle (1) comprising a camera (400), a detection model (700) and a predictor device (13) according to claim 12.

14. The vehicle (1) according to claim 13, further comprising an automated driving system (ADS) (310) arranged to receive control data (706) being based on output data (702) from the detection model (700) of the predictor device (13).

15. A detection model (700), wherein the detection model is a trained machine learning model configured for use in the method of any one of the claims 3 to 7 and/or being trained using the annotation data generated according to the method according to any one of claim 8 to 10.
